# EUROPEAN PATENT APPLICATION

(11) **EP 3 677 112 A1**
(43) Date of publication of application: **08.07.2020**
(21) Application number: 19020004.8
(22) Date of filing: 02.01.2019
(51) Int. Cl.: A01D 46/26, A01D 46/00

(54) **ROW BERRIES HARVESTER**

(71) Applicant: Lastro, Josip, 72260 Busovaca (BA)
(72) Inventor: Lastro, Josip, 72260 Busovaca (BA)
(74) Representative: Vukmir, Mladen

(57) **Abstract**

This harvester, transported on a tractor, is intended to gathering of row crops, specifically berries, by compressed air which shaking force can be regulated to be equal or different on the treetop sides by a driver while harvesting, in function of the row sites sunlight, i.e. of fruits ripeness.

## Description

### 1. Field of the Invention

The present invention relates to a harvesting device and, more particularly, to row berries harvesting device that shall be mounted to a tractor and is suitable for harvesting fruits such as grapes, blackcurrants, raspberries, loganberries, blackberries or other soft fruit from a standing plant cultivated in rows; IPC: A01D46/26 - Devices for shaking trees or shrubs.

### 2. The State-of-the-Art

Several harvesters have been proposed for harvesting berries and fruits. For example, patent applications GB1578926A and US6155036A describe harvesters comprising a shaking mechanism. This type of harvesters is complex and it requires a high level accuracy while operating, which makes the process costly and inefficient.

Another type of harvesters is described by US8635845B1 and comprises rotating brushes which brush the ripe berries off the plant. These harvesters however can damage the plant, as well as the fruits. The brushes need to be rigid enough to do the harvesting and soft enough to save the plant

US patent US3584446A teaches of harvesters attached behind an agricultural vehicle. It describes yet another type of harvester's uses compressed-air to blow the berries from the plant. These harvesters are attached behind agricultural vehicles. The total, common length of the agricultural vehicle with harvester has a turning radius that is unsuitable for operation on the plots whit average distance between rows. Such harvesters are also unsuitable for harvesting on slopes and hills, due to the possible difference in elevation on the slopes.

Thus, there is a need for a harvester having reduced turning radius, capable of harvesting produce of row crop cultivation. There is particular need for a harvester of berries that does not damage the plants and selectively harvests the ripe produce.

### 3. Brief summary of the invention

The present invention addresses these problems by providing a harvester that uses compressed-air to harvest the berries, which is attached to a tractor, with harvesting tools at one side of it. The harvester is consisting of following elements and characteristics:
- A metallic sliding frame which can be mechanically adjusted in order to regulate the gap between the two-side exhausting outlets, in accordance with the treetop wide
- An air-compressor and air distribution system necessary for operations
- A transportation mechanism comprising: (a) Flexible brushes to soften the impact of the fall, thus ensuring an undamaged falling of ripe fruits; (b) An elastic conveyor belt for transportation of the fruits for packaging; (c) A small blower for separation of berries and other materials such as leaves.

### 4. Detailed description of the invention

In the preferred embodiment harvester's frame is a construction of lightweight materials which enables the movement on the sloping field. The construction consists of bars where the width of operational space between the air outlets can be adjusted by telescopic principle.

The harvester shall be set to a tractor while transporting through the plantation, but while harvesting, it resides besides, pulled by tractor. The driver can, during the harvesting, visually inspect and monitor the harvester.

The harvester comprises an air-compressor (or turbine) capable of delivering air at optimal speed. The air is delivered alternatively by two air-conducting square tubes to the 6 exhaust outlets on the end of each tube. The outlets are positioned vertically in cascading manner, to ensure harvesting over the treetop height.

Specially designed turning air-valves are alternatively forwarding the compressed air to each of the 6 outlets at the same time. The 3 upper outlets are open when harvesting the higher trees only.

This process is continuous and adjustable in such a manner that the air speed between the sides of the two air-tubes can be adjusted according to the force necessary for harvesting. In preferred embodiment, the air speed leaving the outlet on one side can be different from the speed on the opposite side, as one side of the row crop on a hill may receive more or less sunlight; than the other row side therefore holds more or less ripe fruits.

The harvested berries fall on the soft amortizing brushes, on both sides of the treetops, then on the conveyor belts. The brushes are of soft polymeric material and do not damage the harvested crop. The conveyor belt is propelled by a small electro-motor, preferably by 12V engine where necessary energy can be provided by the tractor.

### 5. Brief description of the drawings

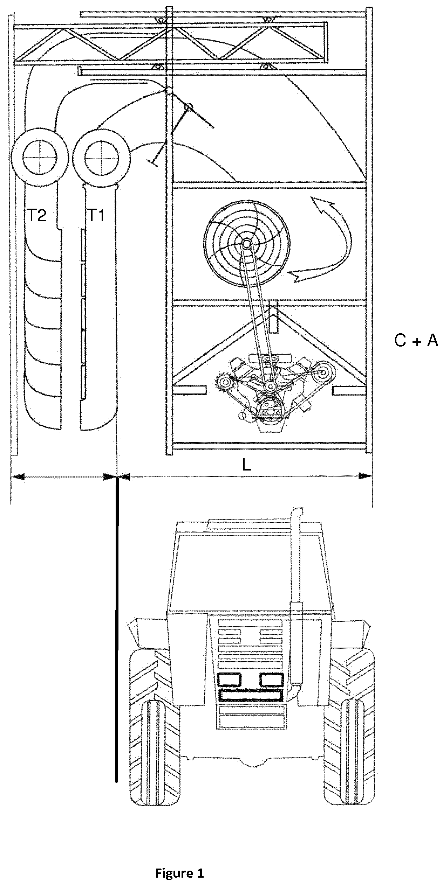

**Figure 1****. Minimum width of the tractor with harvester (Lₘᵢₙ)** - When on route, or out of work, the total width of the tractor with harvester shall be as narrow as possible, what is achieved by two ways: (a) With a minimum gap between the two air-conducting tube (**T₁**, **T₂**); (b) With a minimum gap between the immovable air-conducting tube (**T₁**) and tractor, in order to not touch the wheel (width **I**).

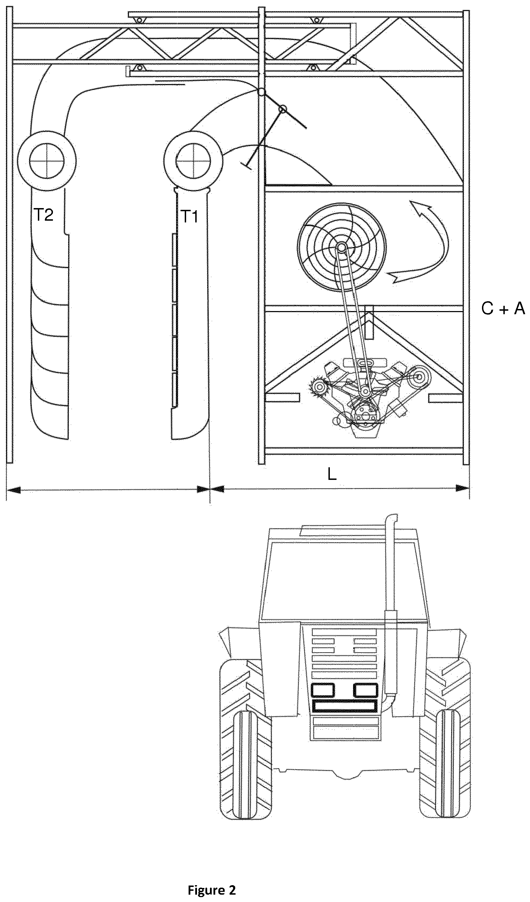

**Figure 2****. Maximum width between the air-conducting tubes** (**Lₘₐₓ**) - The tractor driver can, during the harvesting, adjust the gap between the two air-conducting tubes (**T₁**, **T₂**) in function of the width of the row, more precisely in function of any treetop width.

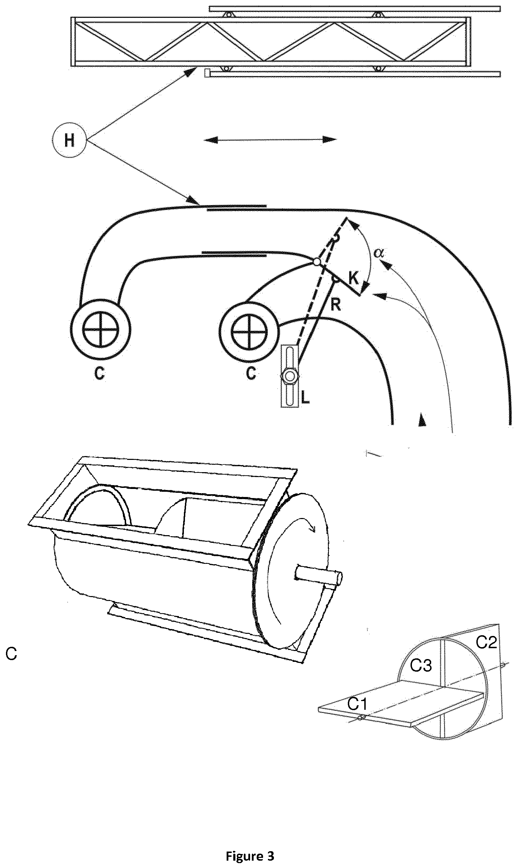

**Figure 3****. Regulation of air-pressure in the air-conducting tubes** (**T**₁, **T₂**) - Coming through the main tube from the air-compressor (**A-C**), the air is directed to the conducting tubes (**T₁**, **T₂**), under equal or different pressures, regulated by the following elements:
   ***A-C*** - *Pressure generating assembly: diesel-generator with air-compressor*
   ***α*** - *Angular motion (max. up to 180°) of the flat **K**, which enables diversification of air-pressure between the two air-conducting tubes (**T₁**, **T₂**)*
   *C* - *Rotation air-blowers (see* **Figure 4***)*
   ***K**- The flap for air-pressure regulation in the tubes **T₁** and **T₂***
   ***L*** - *Guiding plate for sliding handle **R***
   ***P*** - *Outlets' covering panels*
   ***R*** - *Sliding handle for movement adjustment of the flap **K***
   ***H**- Sliding metallic mechanism for telescopic extension-retraction of the air-conducting tubes (**T**₁*, ***T**₂), regulating operating gap in accordance with the treetop width*

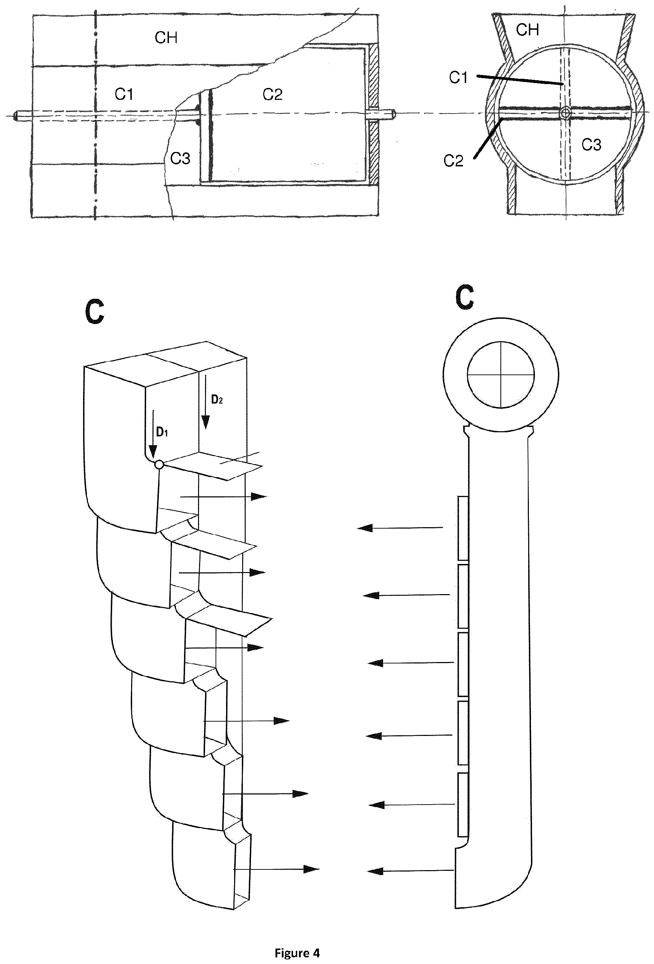

**Figure 4****. Rotation air-blower valve for alternative air-blows to the treetop** - Description of signs:
   ***C*** - *Rotation air-valves for alternate distribution of the air-blows to the exhaust outlets in order to shake the treetop, propelled each by its own electro engine*
   ***CH*** - *Rotation air-valve housing*
   ***C**₁*, ***C₂*** - *Square crossed plates for compressed-air income-outcome*
   ***C₃*** - *Circular plate, jointing firmly the two crossed plates (**C₁***, ***C₂**) in order to separate their rooms, from which the compressed-air is alternatively directed to the exhaust outlets, in periods of alternative angular movements of 180°*
   ***D₁**, **D₂*** - *Rotation air-valve alternative angular movements diagram*
   ***C*** - *Rotation air-valves*
   ***P*** - *Covering pannels being closed when harvesting of the plants with smaller high*

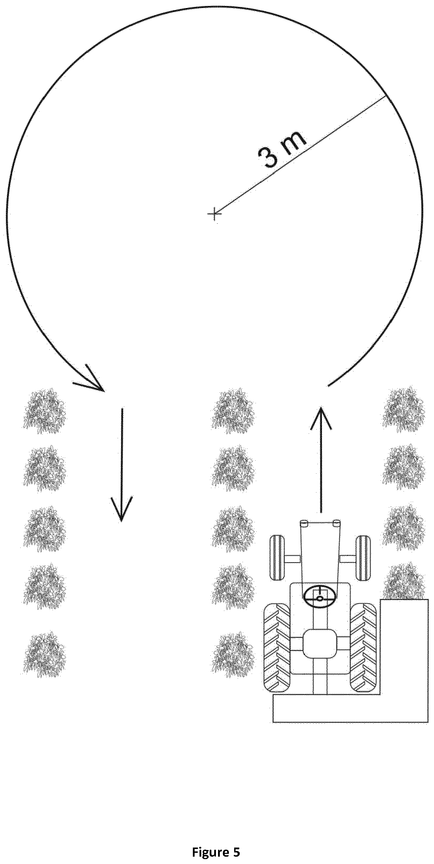

**Figure 5****.** - *Schematic drawing of a minimum turning tractor radius*

## Claims

1. The proposed Row Berries Harvester, **characterized by**: (a) Narrow width, which facilitates transportation on a tractor over the humpy, narrow, curved country roads; (b) Short radius of returns (about 3 m), enabling easier and more quickly return of the tractor to the next row.

2. The harvester from Claim 1, **characterized by** two parallel vertical air-conducting square tubes, disposing each at their ends of 6 exhaust outlets, vertically set one under other, through which tubes the compressed air is alternatively blown to the treetops, shaking and making fall the ripe fruits to the both sides flexible conveyors belts.

3. The two parallel air-tubes from Claim 2, **characterized by** a common square flap on the bifurcation of the main tube bringing air from the compressor, which flap serves to regulate an equal or different air-flow volume, thus the compressed-air pressure on the treetop, in function of the row sites sunlight, i.e. of the fruits ripeness.

4. The shaking of plants, mentioned by Claim 2, **characterized by** alternative air-blows transferred by rotation air-blower valve, set in the air-conducting tubes just over the exhaust outlets. The valve consists of turning square crossed plates, firmly attached to a disk between them, rotating alternatively under 180° in an immovable housing. The housing is alongside two times vertically open in order to: (1) The upper opening to air income and (2) The lower one to air outcome, in order to alternatively receive-forward the compressed air to the exhaust outlets.

5. The three upper of the 6 exhaust outlets from the Claim 2, **characterized by** being closed when harvesting of the plants with smaller high.

6. The gap between the two air-conducting tubes, **characterized by** driver's adjustment of it from one to the next treetop, in function of their width.
